(19)

Europäisches
Patentamt
European
Patent Office
Office européen
des brevets

(11) **EP 2 169 822 B1**

(12) **EUROPEAN PATENT SPECIFICATION**

(45) Date of publication and mention
of the grant of the patent:
**21.09.2011 Bulletin 2011/38**

(51) Int Cl.:
*H02P 25/22* (2006.01)     *H02P 9/10* (2006.01)
*H02P 21/00* (2006.01)

(21) Application number: **08165289.3**

(22) Date of filing: **26.09.2008**

(54) **Method and apparatus for dynamic load sharing**

Verfahren und Vorrichtung zur dynamischen Lastaufteilung

Procédé et appareil pour partager un chargement dynamique

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**31.03.2010 Bulletin 2010/13**

(73) Proprietor: **Vestas Wind Systems A/S
8940 Randers - SV (DK)**

(72) Inventors:
• **Shu Yu, Cao
Singapore 640695 (SG)**
• **Helle, Lars
Suldrup 9541 (DK)**
• **Tripathi, Anshuman
Singapore 680215 (SG)**

• **Larsen, Kim B
Hadsund 9560 (DK)**

(74) Representative: **Johansson, Magnus
Awapatent AB
Box 1066
251 10 Helsingborg (SE)**

(56) References cited:
**EP-A- 1 544 987     JP-A- 1 198 264
US-A- 6 008 616     US-A1- 2003 085 627**

• **R.F.SCHIFERL, C.M.ONG: "Six phase
synchronous machine with AC and DC stator
connections" IEEE TRANSACTIONS ON POWER
APPARATUS AND SYSTEMS, vol. pas-102, no. 8,
August 1983 (1983-08), pages 2694-2701,
XP002501827**

## Description

## Technical field

The present invention generally relates to multiphase generators, and more specifically to modular generators comprising multiple three phase generators with interleaved windings. The invention further relates to a controller suitable for such generators.

## Background of the invention

Electric power generators are devices that convert mechanical energy into electrical energy. In an AC generator, the rotor is driven by e.g. a turbine and electric currents are induced in the stator windings of the generator. An AC generator is normally either of a synchronous type or an asynchronous type. For a long time synchronous generators have been used in power systems of different kinds. Synchronous generators are e.g. used both in large power systems, such as nuclear power plants, as well as in small isolated systems, such as wind power plants.

In contrast to the to the asynchronous generator (or induction generator) which uses induction to provide a magnetic flux, the synchronous generator uses either a permanent magnet (PM) or electrical magnetization to produce its magnetization flux. In this respect, the use of permanent magnet generators has found increasing acceptance in recent years, mainly due to the need for inexpensive and reliable excitation components. The application of new permanent magnetic materials has resulted in high-efficiency generators which are superior to other types of generators in many ways.

A synchronous generator normally comprises three phases, but in recent years many investigations related to multiphase generators have been made, a lot of them towards six phase generators. The interest in multiphase generators lies mainly in the fact that with many phases the high currents associated with high power generators can be divided among more phases. Other advantages of multiple phase generators compared to three phase generators are e.g. lower noise levels at the same power level, lower harmonic distortion and lower EMI.

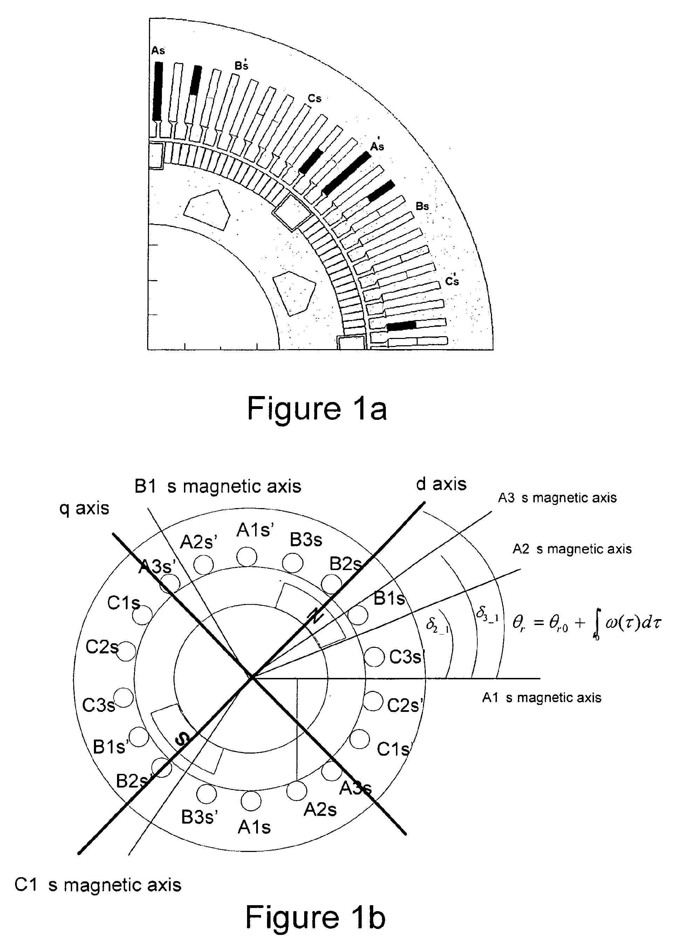

Generators with six or more phase windings are mainly found in full rate wind turbine power conversion application where load sharing and output power distribution among the converter modules as well as output power scalability in low and high wind are desired. One approach to implementation of a multiphase generator, such as a six phase generator, is to use a modular generator, i.e. a generator composed of multiple three phase generators with interleaved windings as illustrated in figure 1 a with a six-phase 8-pole PM generator.

The advantages of the modular generator with interleaved winding configuration include (1) The mechanical force is always balanced with respect to the generator shaft and the mechanical stress is evenly distributed over the entire generator structure irrespective of the output power level of individual three phase systems; (2) Identical reluctance in the air gap for each three phase systems, which facilitates identification and measurement of the generator parameters in one set of three phase system for control purpose; (3) Failure of any sub-system does not require the entire power generation system to be shutdown. The reliability and availability of power output is thus improved.

Compared to the operation of a single three phase generator, when operating a modular generator comprising e.g. two or more three phase interleaved windings it is important to take into consideration the dynamic load or power sharing of the different three phase systems. More specifically, for the modular PM generator composed of multiple three phase generators with interleaved windings, a conventional current feedback field oriented control is not sufficient due to the significant magnetic coupling between each three phase system.

The normal way to design a six phase modular generator is to arrange two star connected windings with a 30 electrical degrees phase-shift between the two stars. By this arrangement the 11th and 13th harmonics will be reduced thereby lowering the stress on the generator system. Another way is to split the phase belt of a conventional three-phase machine into two parts with spatial phase separation of 30 electrical degrees. Yet another way is to use a machine with star connected windings and arranging a star-triangle transformer at the output of one generator in order to get a 30 electrical degrees phase-shift between the two generators. However, the first described design is the most common arrangement today.

Document US6008616 describes an apparatus for a pole change induction motor and control method for that motor. The pole change motor is electrically changed between an n number of poles and a 2n number of the poles (n=2, 4, - - -) so as to secure an output torque of the pole change induction motor in a constant driving mode with a high rotation speed of the induction motor without increase in a dimension of either of the induction motor or an inverter associated with the pole change induction motor and without occurrence in a torque variation.

The publication "Six phase synchronous machine with AC and DC stator connections", IEEE 1983, comes to the conclusion that for most operating conditions a displacement angle of 30˚ between the phases appears to be optimum with respect to voltage harmonic distortion and torque pulsation.

Document US2003085627 describes a multi-phase electric motor with third harmonic current injection. Significantly increased torque is provided from a motor arrangement having a stator with a core and at least two three-phase windings wound on the core. The two windings are separated spatially by 30 electrical degrees. Power is provided to the two windings by two inverters each supplying power at the same fundamental frequency and with a component at the third harmonic of the fundamental, with the power provided from one inverter shifted in time by 30° of the fundamental frequency with respect to the power provided by the other inverter. The additional third harmonic component reduces the effective peak flux density, allowing an increase in the fundamental component of flux to allow an increase in effective torque, with the third harmonic component also providing additional torque.

## Summary of the invention

In view of the above, an objective of the invention is to provide a method for dynamic torque or power sharing of a modular generator system comprising multiple three phase systems with interleaved windings. The modular generator model in the rotor reference d-q frame may be derived and used as the foundation to realize the dynamic load sharing decoupling control. The decoupling control methodology is described as below with six phase generator as an example of application. The method is general and applicable for any multiple three phase modular generator control.

The invention is precisely defined in method claim 1 and corresponding device claim 5. The dependent claims recite advantageous embodiments of the invention.

A torque/power scheduler minimizes the dynamic transition caused by cross magnetic coupling between the three phase systems. The slope change of the torque or power reference signal is limited in the torque/power scheduler. Simultaneous changing of the torque/power reference signals of any two sets of three phase systems is avoided in the torque/power scheduler for dynamic decoupling control purpose.

In control system implementation, the rotor flux linkage magnitude and the electrical angular shift between two different three phase systems are identified from the Back electromotive force of the generator in open circuit when the machine operates at constant speed. This makes the dynamic decoupling control robust against generator parameter variations.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

## Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

Fig 1a illustrates a six phase, eight pole modular PM generator with interleaved windings. In Fig 1a, phase layout of one three phase system is marked out. The blank stator slots are for the other three phase system that has not been marked out in the figure;

Fig 1b illustrates a nine phase, two pole modular PM generator;

Fig 2 illustrates the profile of inter-phase coupling as a function of the electrical angle shift between two three phase systems;

Figure 3 illustrates a field oriented stator current based feedback dynamic load/power sharing control algorithm according to a first embodiment of the present invention;

Figure 4 illustrates a stator flux based dynamic load/power sharing control algorithm according to a second embodiment of the present invention.

## Detailed description of preferred embodiments

For a modular PM generator with N set of three phase systems "$a_1b_1c_1$" "$a_2b_2c_2$"... "$a_Nb_NC_N$", the magnetic flux axis, the rotor position, and angle shift of the three phase systems are defined according to: the d-axis (direct rotor flux axis) is defined as the rotor magnetic flux axis; the q-axis leads d-axis 90° electrical degree in counterclockwise direction; the rotor position angle $\theta_r$ is defined as the angle between d-axis and phase a1 magnetic flux axis of the three phase system $a_1b_1c_1$; $\delta_{m\_1}$ denotes the electrical angle shift between three phase set $a_mb_mc_m$ and three phase set $a_1b_1c_1$;

The above definitions are graphically illustrated in Figure 1b with a nine phase two pole machine.

Assuming a sinusoidal distribution of the stator phase windings, the inductive coupling within one three phase system $a_m b_m c_m$ can be represented as matrix "$L_{ss}$", and the inductive coupling between two set of three phase winding $a_n b_n c_n$ and $a_m b_m c_m$ can be presented as matrix "$LM_{n-m}$".

$$L_{ss} = \begin{bmatrix} L_{sl} + L_m & -L_m/2 & -L_m/2 \\ -L_m/2 & L_{sl} + L_m & -L_m/2 \\ -L_m/2 & -L_m/2 & L_{sl} + L_m \end{bmatrix}$$

Where, $L_{sl}$ denotes the stator phase leakage inductance; $L_m$ denotes the stator phase mutual inductance;

$$LM_{n\_m} = L_m * \begin{bmatrix} \cos(\delta_{n\_1} - \delta_{m\_1}) & \cos(\delta_{n\_1} - \delta_{m\_1} + 2*\pi/3) & \cos(\delta_{n\_1} - \delta_{m\_1} - 2*\pi/3) \\ \cos(\delta_{n\_1} - \delta_{m\_1} - 2*\pi/3) & \cos(\delta_{n\_1} - \delta_{m\_1}) & \cos(\delta_{n\_1} - \delta_{m\_1} + 2*\pi/3) \\ \cos(\delta_{n\_1} - \delta_{m\_1} + 2*\pi/3) & \cos(\delta_{n\_1} - \delta_{m\_1} - 2*\pi/3) & \cos(\delta_{n\_1} - \delta_{m\_1}) \end{bmatrix}$$

Where, $\delta_{n-1} - \delta_{m-1}$ is the angle shift between three phase system $a_n b_n c_n$ and $a_m b_m c_m$.

The phase inductance coupling matrix of the generator can be represented as:

$$L_{a1b1c1\_a2b2c2\_\Lambda\,aNbNcN} = \begin{bmatrix} Lss & LM_{1\_2} & ... & LM_{1\_N} \\ LM_{2\_1} & Lss & ... & LM_{2\_N} \\ ... & ... & ... & ... \\ LM_{N\_1} & LM_{N\_2} & ... & Lss \end{bmatrix}$$

Where, $LM_{m\_n} = LM_{n\_m}^T$

The rotor flux seen from the magnetic flux axis of three phase $a_m b_m c_m$ is:

$$\psi_{r\_a_m b_m c_m} = \psi_{mr} * \begin{bmatrix} \cos(\theta_r - \delta_{m\_1}) \\ \cos(\theta_r - \delta_{m\_1} - 2*\pi/3) \\ \cos(\theta_r - \delta_{m\_1} + 2*\pi/3) \end{bmatrix}$$

Where, $\psi_{mr}$ denotes the magnitude of rotor flux linkage.

The stator flux equation of a 3*N phase modular generator is:

$$\begin{bmatrix} \psi_{a1b1c1} \\ \psi_{a2b2c2} \\ ... \\ \psi_{aNbNcN} \end{bmatrix} = \begin{bmatrix} Lss & LM_{1\_2} & ... & LM_{1\_N} \\ LM_{2\_1} & Lss & ... & LM_{2\_N} \\ ... & ... & ... & ... \\ LM_{N\_1} & LM_{N\_2} & ... & Lss \end{bmatrix} * \begin{bmatrix} i_{a1b1c1} \\ i_{a2b2c2} \\ ... \\ i_{aNbNcN} \end{bmatrix} + \begin{bmatrix} \psi_{r\_a1b1c1} \\ \psi_{r\_a2b2c2} \\ ... \\ \psi_{r\_aNbNcN} \end{bmatrix}$$

The stator voltage equation of a 3*N phase modular generator is:

$$\begin{bmatrix} u_{a1b1c1} \\ u_{a2b2c2} \\ \dots \\ u_{aNbNcN} \end{bmatrix} = R_s * \begin{bmatrix} i_{a1b1c1} \\ i_{a2b2c2} \\ \dots \\ i_{aNbNcN} \end{bmatrix} + \begin{bmatrix} Lss & LM_{1\_2} & \dots & LM_{1\_N} \\ LM_{2\_1} & Lss & \dots & LM_{2\_N} \\ \dots & \dots & \dots & \dots \\ LM_{N\_1} & LM_{N\_2} & \dots & Lss \end{bmatrix} * \begin{bmatrix} \dfrac{di_{a1b1c1}}{dt} \\ \dfrac{di_{a2b2c2}}{dt} \\ \dots \\ \dfrac{di_{aNbNcN}}{dt} \end{bmatrix} + \begin{bmatrix} \dfrac{d\psi_{r\_a1b1c1}}{dt} \\ \dfrac{d\psi_{r\_a2b2c2}}{dt} \\ \dots \\ \dfrac{d\psi_{r\_aNbNcN}}{dt} \end{bmatrix}$$

In order to implement dynamic decoupling of the load/power sharing a rotor reference d-q frame model of the 3*N phase PM generator is derived. Assuming sinusoidal winding distribution, the phase voltages $u_{a_m b_m c_m}$, phase currents $i_{a_m b_m c_m}$ and stator flux $\Psi_{a_m b_m c_m}$ may be transferred to the rotor reference frame according to:

$$u_{d_m q_m 0_m} = K_{sm} * u_{a_m b_m c_m}$$

$$i_{d_m q_m 0_m} = K_{sm} * i_{a_m b_m c_m}$$

$$\psi_{d_m q_m 0_m} = K_{sm} * \psi_{a_m b_m c_m}$$

where

$$K_{sm} = \frac{2}{3} \begin{bmatrix} \cos(\theta_r - \delta_{m\_1}) & \cos(\theta_r - \delta_{m\_1} - 2*\pi/3) & \cos(\theta_r - \delta_{m\_1} + 2*\pi/3) \\ -\sin(\theta_r - \delta_{m\_1}) & -\sin(\theta_r - \delta_{m\_1} - 2*\pi/3) & -\sin(\theta_r - \delta_{m\_1} + 2*\pi/3) \\ 1/2 & 1/2 & 1/2 \end{bmatrix}$$

The Park transformation matrix of a 3*N phase modular PM generator is:

$$Ks = \begin{bmatrix} K_{s1} & 0 & 0 & 0 \\ 0 & K_{s2} & 0 & 0 \\ 0 & 0 & \dots & 0 \\ 0 & 0 & 0 & K_{sN} \end{bmatrix}$$

The stator flux equation of 3*N phase PM modular generator in rotor reference d-q frame is derived as:

$$\psi_{d1} = (L_{sl} + (3/2)*L_m) * i_{d1} + (3/2)*L_m * \{i_{d2} + i_{d3} + \Lambda\ \Lambda + i_{dN}\} + \psi_{mr}$$

$$\psi_{q1} = (L_{sl} + (3/2)L_m) * i_{q1} + (3/2)*L_m * \{i_{q2} + i_{q3} + \Lambda\ \Lambda + i_{qN}\}$$

$$\psi_{dN} = (L_{sl} + (3/2) * L_m) * i_{dN} + (3/2) * L_m * \left\{ i_{d1} + i_{d2} + \Lambda\ \Lambda\ + i_{d(N-1)} \right\} + \psi_{mr}$$

$$\psi_{qN} = (L_{sl} + (3/2) * L_m) * i_{qN} + (3/2) * L_m * \left\{ i_{q1} + i_{q2} + \Lambda\ \Lambda\ + i_{q(N-1)} \right\}$$

The stator voltage equation of the 3*N phase PM modular generator in rotor reference d-q frame is derived as:

$$u_{d1} = R_s * i_{d1} - \omega_r * \left\{ (L_{sL} + (3/2) * L_m) * i_{q1} + (3/2) * L_m * i_{q2} + \Lambda\ \Lambda\ + (3/2) * L_m * i_{qN} \right\}$$
$$+ \left\{ (L_{sL} + (3/2) * L_m) * \frac{di_{d1}}{dt} + (3/2) * L_m * \frac{di_{d2}}{dt} + \Lambda\ \Lambda\ + (3/2) * L_m * \frac{di_{dN}}{dt} \right\}$$

$$u_{q1} = R_s * i_{q1} + \omega_r * \left\{ (L_{sL} + (3/2) * L_m) * i_{d1} + (3/2) * L_m * i_{d2} + \Lambda\ \Lambda\ + (3/2) * L_m * i_{dN} \right\}$$
$$+ \left\{ (L_{sL} + (3/2) * L_m) * \frac{di_{q1}}{dt} + (3/2) * L_m * \frac{di_{q2}}{dt} + + \Lambda\ \Lambda\ + (3/2) * L_m * \frac{di_{qN}}{dt} \right\} + \psi_{mr} * \omega_r$$

$$u_{dN} = R_s * i_{dN} - \omega_r * \left\{ (L_{sL} + (3/2) * L_m) * i_{qN} + (3/2) * L_m * i_{q1} + \Lambda\ \Lambda\ + (3/2) * L_m * i_{q(N-1)} \right\}$$
$$+ \left\{ (L_{sL} + (3/2) * L_m) * \frac{di_{dN}}{dt} + (3/2) * L_m * \frac{di_{d1}}{dt} + \Lambda\ \Lambda\ + (3/2) * L_m * \frac{di_{d(N-1)}}{dt} \right\}$$

$$u_{qN} = R_s * i_{qN} + \omega_r * \left\{ (L_{sL} + (3/2) * L_m) * i_{dN} + (3/2) * L_m * i_{d1} + \Lambda\ \Lambda\ + (3/2) * L_m * i_{d(N-1)} \right\}$$
$$+ \left\{ (L_{sL} + (3/2) * L_m) * \frac{di_{qN}}{dt} + (3/2) * L_m * \frac{di_{q1}}{dt} + \Lambda\ \Lambda\ + (3/2) * L_m * \frac{di_{q(N-1)}}{dt} \right\} + \psi_{mr} * \omega_r$$

The electrical torque of a 3*N phase modular PM generator in the stator phase natural reference frame is:

$$Te = \frac{poles}{2} * \begin{bmatrix} i^T_{a1b1c1} & i^T_{a2b2c2} & \cdots & i^T_{aNbNcN} \end{bmatrix} * \begin{bmatrix} \dfrac{\partial \psi_{r\_a1b1c1}}{\partial \theta_r} \\[2mm] \dfrac{\partial \psi_{r\_a2b2c2}}{\partial \theta_r} \\[2mm] \cdots \\[2mm] \dfrac{\partial \psi_{r\_aNbNcN}}{\partial \theta_r} \end{bmatrix}$$

Applying the Park transformation matrix of the 3*N phase modular PM generator to the above torque equation, the electrical torque in the rotor reference d-q frame may be expresses as:

$$Te = \frac{3 * poles}{4} * \psi_{mr} * \sum_{m=1}^{N} i_{qm}$$

The inductance matrix of a six phase PM machine in the natural phase frame is a function of the phase shift angle $\delta_{2\_1}$ between the two set of windings.

$$L_{abc1\_a2b2c2} = \begin{bmatrix} L_{sl} + L_m & -L_m/2 & -L_m/2 & L_m*\cos(\delta_{2\_1}) & L_m*\cos(\delta_{2\_1}+2*\pi/3) & L_m*\cos(\delta_{2\_1}-2*\pi/3) \\ -L_m/2 & L_{sl}+L_m & -L_m/2 & L_m*\cos(\delta_{2\_1}-2*\pi/3) & L_m*\cos(\delta_{2\_1}) & L_m*\cos(\delta_{2\_1}+2*\pi/3) \\ -L_m/2 & -L_m/2 & L_{sl}+L_m & L_m*\cos(\delta_{2\_1}+2*\pi/3) & L_m*\cos(\delta_{2\_1}-2*\pi/3) & L_m*\cos(\delta_{2\_1}) \\ L_m*\cos(\delta_{2\_1}) & L_m*\cos(\delta_{2\_1}-2*\pi/3) & L_m*\cos(\delta_{2\_1}+2*\pi/3) & L_{sl}+L_m & -L_m/2 & -L_m/2 \\ L_m*\cos(\delta_{2\_1}+2*\pi/3) & L_m*\cos(\delta_{2\_1}) & L_m*\cos(\delta_{2\_1}-2*\pi/3) & -L_m/2 & L_{sl}+L_m & -L_m/2 \\ L_m*\cos(\delta_{2\_1}-2*\pi/3) & L_m*\cos(\delta_{2\_1}+2*\pi/3) & L_m*\cos(\delta_{2\_1}) & -L_m/2 & -L_m/2 & L_{sl}+L_m \end{bmatrix}$$

The inter-phase coupling coefficients between the two three phase systems are defined as:

$$coeff_{m1} = \cos(\delta_{2\_1})$$

$$coeff_{m2} = \cos(\delta_{2\_1} + 2*\pi/3)$$

$$coeff_{m3} = \cos(\delta_{2\_1} - 2*\pi/3)$$

Treating each phase coupling equally important, the total coupling coefficients of the two three phase system is defined as:

$$coeff_{mTotal} = |coeff_{m1}| + |coeff_{m2}| + |coeff_{m3}|$$

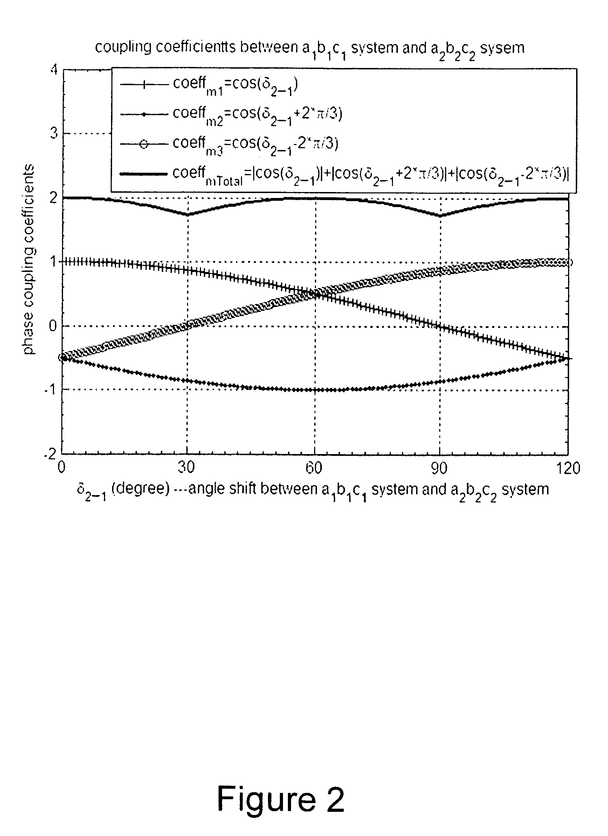

Figure 2 is a graphical presentation of the equations above and illustrates how the inter-phase coupling coefficients $coeff_{m1}$, $coeff_{m2}$, $coeff_{m3}$ and $coeff_{mTotal}$ between the two three phase systems varies in relation to the electrical angle shift $\delta_{2\_1}$ between the two systems.

From the topmost curve it is determined that the minimum total magnetic coupling between the two system is reached at $\delta_{2\_1}$ =30° and $\delta_{2\_1}$ =90° . Consequently, by arranging the windings at an angle shift of either $\delta_{2\_1}$=30° or $\delta_{2\_1}$ =90° the physical coupling between the two three phase systems will be minimized, thereby minimizing the magnetic circuit saturation due to coupling effects.

For a nine phase modular generator, using similar method of analysis, the minimal physical coupling is achieved at $\delta_{2\_1}$ =30°, $\delta_{3\_1}$ =60°, or $\delta_{3\_1}$ =90°.

For a modular generator with more than twelve phases, the coupling exists between any two three phase systems. It is difficult to find a winding layout that can minimize the total physical coupling.

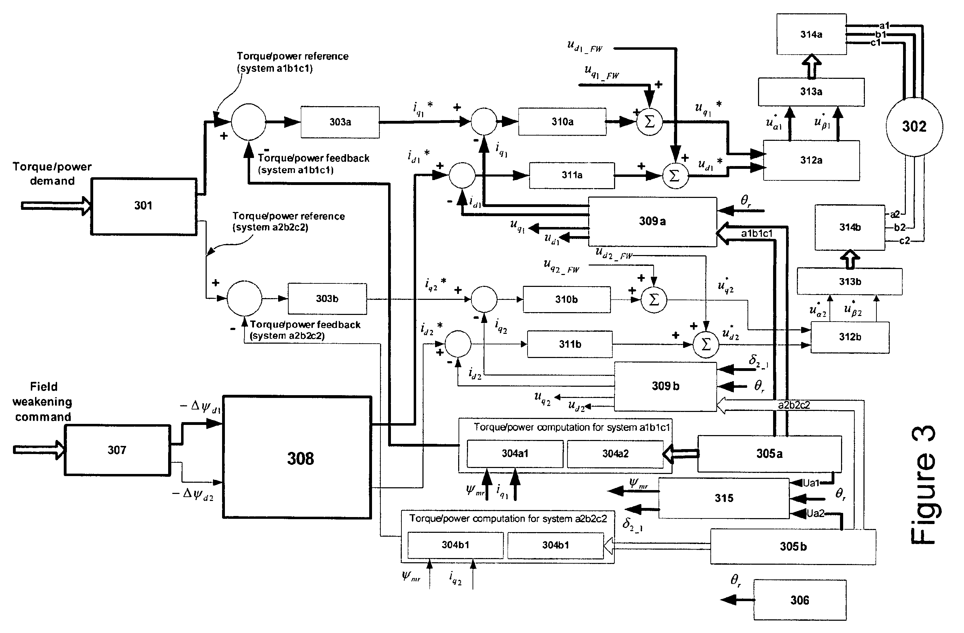

Figure 3 illustrates a field oriented stator current feedback dynamic load/power sharing control algorithm according to a first embodiment of the present invention for realizing dynamic load or power sharing of a modular PM generator composed of multiple three phase systems with interleaved windings. The description below is given for a six phase modular generator as an example of application. The principle and the method is applicable for controlling a dynamic load/power sharing of a modular PM generator with any multiple number of three phase systems for a wind turbine application.

The algorithm shown in the figure is preferably implemented for the for the simplest coupling case with a winding configuration ($\delta_r$) of 90° electrical angle shift between two sets of three phase systems for a six phase, eight pole PM generator as illustrated in Figure 1a.

In block 315, the angle shift $\delta_{2\_1}$ and the rotor flux $\Psi_{mr}$ are identified from the phase Back electromotive force voltage signals in open circuit condition when generator operates at constant speed. The phase shift electrical angle $\delta_{2\_1}$ is measured as the phase difference of Back electromotive force voltage signals between phase a2 and phase a1. The rotor flux $\Psi_{mr}$ is measured as the result of the phase peak Back electromotive force voltage magnitude *ua* (*peak*) divided by the generator angular speed $\omega_r$.

Block 305a measures the phase current signals and phase voltage signals of the three phase system $a_1b_1c_1$. Block 305b measures the phase current signals and phase voltage signals of the three phase system $a_2b_2c_2$.

In block 306, the electrical rotor angle is estimated from a position senorless scheme or computed from $\theta_r = (P/2) * \theta_m$. The rotor position $\theta_m$ (i.e. the mechanical angle with zero degree defined as the rotor d-axis aligned with phase a1 flux axis) of the PM machine is measured using a position encoder mounted on the generator shaft.

Block 309a performs the park transformation of the phase current and phase voltage from $a_1b_1c_1$ frame to rotor reference dq frame. The input signals for block 309a are measured phase voltage $ua_1$, $ub_1$ $uc_1$, phase current $ia_1$ $ib_1$ $ic_1$, and rotor position $\theta_r$. The output signals of block 309a are the current and voltage dq component $id_1$ $iq_1$ $ud_1$ $uq_1$ for the three phase system $a_1b_1c_1$, which are used as signals for current control, electrical torque compuation, and voltage feed forward compensation,

Block 309b performs the park transformation of the phase current and voltage from $a_2b_2c_2$ three phase frame to rotor reference dq frame. The input signals for block 309b are measured phase voltage $ua_2$, $ub_2$ $uc_2$, phase current $ia_2$ $ib_2$ $ic_2$, rotor position $\theta_r$, and the angle shift $\delta_{2\_1}$ between the two sets of three phase systems. The output signals of block 309b are the current and voltage dq component $id_2$ $iq_2$ $ud_2$ $uq_2$ for the three phase system $a_2b_2c_2$.

Either torque control or power control is implemented in the wind turbine generator control system. The torque control is realized by transferring the power command into torque command by dividing the power reference by angular speed $\omega_r$, then closing the control loop based on the torque reference and torque feedback signals. The power control is realized by directly closing the power control loop based on the power reference and power feedback signal with appropriate compensation of the loop bandwidth change due to operation speed level.

A torque or power scheduler 301 is responsible for distributing a torque or power demand for a modular generator 302 into two sets of three phase systems. In order to mimimize the dynamic transition caused by the coupling between the two three phase systems, the slope of torque or power demand change should be limited. For the same reason, after a torque or power command change on one set of three phase system, a fixed time delay is inserted before allowing the torque or power command change on the other set of three phase system. In this way, simultaneous change of torque or power command in both three phase systems is avoided.

A torque or power controller 303a for the first system (denoted a1b1c1 in figure 3) generates the q-axis current reference, $i_{q1}^*$, based on a torque or power reference provided by the torque or power scheduler 301 and a torque or power feedback provided by the first torque observer 304a1 or the power observer 304a2.

The torque observer 304a1 computes the electrical torque of the first system based on the q-axis current and the rotor flux according to:

$$T_{e1} = (3/4) * poles * \psi_{mr} * i_{q1}$$

The power observer 304a2 computes the generator real power based on the measured stator phase currents and phase voltages according to:

$$P_{e1} = i_{a1} * u_{a1} + i_{b1} * u_{b1} + i_{c1} * u_{c1}$$

A corresponding torque or power controller 303b for the second system (denoted a2b2c2 in figure 3) generates the q-axis current reference, $i_{q2}^*$, based on a torque or power reference provided by the torque or power scheduler 301 and a torque or power feedback provided by the torque observer 304b1 or the power observer 304b2 according to:

$$T_{e2} = (3/4) * poles * \psi_{mr} * i_{q2}$$

$$P_{e2} = i_{a2} * u_{a2} + i_{b2} * u_{b2} + i_{c2} * u_{c2}$$

A field weakening scheduler 307 is used to distribute the demagnetization flux components among the two sets of three phase systems. The d-axis current reference signal, $i_{d1}{}^*$, $i_{d2}{}^*$, for each individual three phase system is computed by a d-axis current reference generation block 308 with the coupling effects to other three phase systems included according to

$$i_{d1}{}^{\cdot} = -\left\{ \frac{L_{sl} + (3/2)*L_m}{L_{sl}*(L_{sl} + 3*L_m)} \Delta\psi_{d1}{}^{\cdot} - \frac{(3/2)*L_m}{L_{sl}*(L_{sl} + 3*L_m)} \Delta\psi_{d2}{}^{\cdot} \right\}$$

$$i_{d2}{}^{\cdot} = -\left\{ \frac{L_{sl} + (3/2)*L_m}{L_{sl}*(L_{sl} + 3*L_m)} \Delta\psi_{d2}{}^{\cdot} - \frac{(3/2)*L_m}{L_{sl}*(L_{sl} + 3*L_m)} \Delta\psi_{d1}{}^{\cdot} \right\}$$

The torque or power scheduler 301 and the field weakening scheduler 307 are responsible for achieving optimal operation of the modular generator 302 and converter systems.

The feedback current signals, $i_{d1}$, $i_{q1}$, $i_{d2}$, $i_{q2}$, are subtracted from the current reference signals, $i_{d1}{}^*$, $i_{q1}{}^*$, $i_{d2}{}^*$, $i_{q2}{}^*$, and provided to a q-axis and d-axis current controller 310a, 311a, and 310b, 311b for each system respectively. An appropriate voltage feed-forward component $u_{q1\_FW}$, $u_{d1\_FW}$, $u_{q2\_FW}$, $u_{d2\_FW}$, is added to the each corresponding q-axis/d-axis voltage reference, $u_{q1}{}^*$, $u_{d1}{}^*$, $uq_2{}^*$, $u_{d2}{}^*$, respectively, in order to compensate the rotational $B_{emf}$ coupling effect from of its own three phase system and the current/voltage coupling effects from the other three phase system according to

$$u_{d1\_FW} = K_{FW} * \frac{(3/2)*L_m}{(L_{sl} + (3/2)*L_m)} * \left\{ u_{d2} - R_s * i_{d2} \right\} - \frac{L_{sl}*(L_{sl} + 3*L_m)}{(L_{sl} + (3/2)*L_m)} * \omega_r * i_{q1}$$

$$u_{q1\_FW} = K_{FW} * \frac{(3/2)*L_m}{(L_{sl} + (3/2)*L_m)} * \left\{ u_{q2} - R_s * i_{q2} \right\} + \frac{L_{sl}*(L_{sl} + 3*L_m)}{(L_{sl} + (3/2)*L_m)} * \omega_r * i_{d1} + \frac{L_{sl}}{(L_{sl} + (3/2)*L_m)} * \psi_{mr} * \omega_r$$

$$u_{d2\_FW} = K_{FW} * \frac{(3/2)*L_m}{L_{sl} + (3/2)*L_m} * \left\{ u_{d1} - R_s * i_{d1} \right\} - \frac{L_{sl}*(L_{sl} + 3*L_m)}{(L_{sl} + (3/2)*L_m)} * \omega_r * i_{q2}$$

$$u_{q2\_FW} = K_{FW} * \frac{(3/2)*L_m}{(L_{sl} + (3/2)*L_m)} * \left\{ u_{q1} - R_s * i_{q1} \right\} + \frac{L_{sl}*(L_{sl} + 3*L_m)}{(L_{sl} + (3/2)*L_m)} * \omega_r * i_{d2} + \frac{L_{sl}}{(L_{sl} + (3/2)*L_m)} * \psi_{mr} * \omega_r$$

where, the feed forward gain $0<K_{FW}<1$ is introduced to control the strength of the cross system decoupling signal.

Block 312a transfers the q-axis/d-axis voltage signals, $u_{q1}{}^*$, $u_{d1}{}^*$ to the stator stationary $\alpha1\beta1$ frame for the first three phase system a1b1c1 according to:

$$u^{*}_{\alpha 1} = \cos(\theta_r) * u^{*}_{d1} - \sin(\theta_r) * u^{*}_{q1}$$

$$u^{*}_{\beta 1} = \sin(\theta_r) * u^{*}_{d1} + \sin(\theta_r) * u^{*}_{q1}$$

$$u_{d2\_FW} = -\frac{(3/2) * L_m}{L_{sl} + (3/2) * L_m} * u_{d1} + \frac{(3/2) * L_m}{L_{sl} + (3/2) * L_m} * R_s * i_{d1} - \frac{L_l * (L_l + 3 * L_m)}{L_{sl} + (3/2) * L_m} * i_{q2} * (P/2) * \omega_m$$

Block 312b transfer the q-axis/d-axis voltage signals, $u_{q2}{}^*$, $u_{d2}{}^*$, to the stator stationary $\alpha 2\beta 2$ frame for the second three phase system $a_2b_2c_2$ according to:

$$u^{*}_{\alpha 2} = \cos(\theta_r - \delta_r) * u^{*}_{d2} - \sin(\theta_r - \delta_r) * u^{*}_{q2}$$

$$u^{*}_{\beta 2} = \sin(\theta_r - \delta_r) * u^{*}_{d2} + \sin(\theta_r - \delta_r) * u^{*}_{q2}$$

The PWM modulators 313a and 313b take the voltage reference in the stator stationary frame as input and generate the gating signals for the PWM converter 314a and 314b respectively. The PWM converter 314a applies the first three phase system voltage ua1, ub1, uc1 to the generator 302. The PWM converter 314b applies the second three phase system ua2, ub2 and uc2 to the generator 302.

The dynamic load sharing between two sets of three phase systems is hence realized by including the coupling effect in the d-axis current reference computation and adding the appropriate decoupling feed-forward voltage compensation in the dq frame voltage reference signal generation

The principle of the decoupling method above can be applied to support any physical angle shift between the three phase systems. Other implementation methods for any multiple three phase modular PM generator can also be developed based on the principle illustrated using the six phase generator.

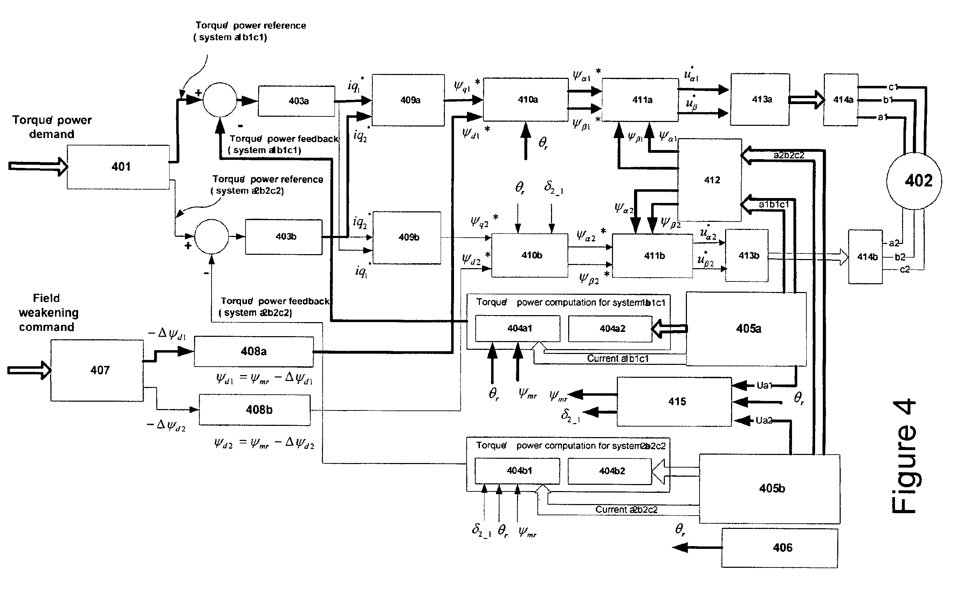

Figure 4 illustrates a stator flux vector control based dynamic load/power sharing algorithm according to a second embodiment of the present invention for realizing dynamic load or power sharing of a modular PM generator composed of multiple three phase systems with interleaved windings. The algorithm may be used for controlling a dynamic load/power sharing of a modular PM generator arranged in a wind turbine.

The algorithm shown in the figure is preferably implemented for a six phase PM generator as illustrated in Figure 1a. The principle can be applied to stator flux vector control based load/power sharing of any multiple three phase modular generator.

In block 415, the angle shift $\delta_{2\_1}$ and the rotor flux $\Psi_{mr}$ are identified from the phase Bemf voltage signals in the generator open circuit and constant speed operation condition. The phase shift electrical angle $\delta_{2\_1}$ is measured as the phase angle difference of Bemf voltage signals between phase a2 and phase a1. The rotor flux $\Psi_{mr}$ is measured as the phase peak bemf voltage magnitude $ua1$ (*peak*) divided by the generator angular speed $\omega_r$.

Block 405a measures the phase current signals and phase voltage signals of the three phase system $a_1b_1c_1$. Block 405b measures the phase current signals and phase voltage signals of the three phase system $a_2b_2c_2$.

In block 406, the electrical rotor angle is estimated from a position senorless scheme or computed from $\theta_r = (P/2) * \theta_m$. The rotor position $\theta_m$ (i.e. the mechanical angle with zero degree defined as the rotor d-axis aligned with phase a1 flux axis) of the PM machine is measured using a position encoder mounted on the generator shaft.

Either torque control or power control is implemented in the wind turbine generator control system. The torque control is realized by transferring the power command into torque command by dividing the power reference by angular speed $\omega_r$, then closing the control loop based on the torque reference and torque feedback signals. The power control is realized by directly closing the power control loop based on the power reference and power feedback signal with appropriate compensation of the loop bandwidth change due to operation speed level.

A torque or power scheduler 401 is responsible for distributing a torque or power demand for a modular generator 402 into two sets of three phase systems. In order to mimimize the dynamic transition caused by the coupling between the two three phase systems, the slope of torque or power demand change should be limited. For same reason, after a torque or power command change on one set of three phase system, a fixed time delay is inserted before allowing the torque or power command change on the other set of three phase system. In this way, simultaneous change of torque or power command in both three phase systems is avoided.

A torque or power controller 403a for the first system (denoted a1b1c1 in figure 4) generates the q-axis current reference, $i_{q1}{}^*$, based on a torque or power reference provided by the torque or power scheduler 401 and a torque or power feedback provided by a first torque observer 404a1 or a power observer 404a2.

The torque observer 404a1 is provided with current/voltage measurements from the current and voltage measurement block 405a and rotor position from the rotor position measurement block 406. The output of torque observer is computed according to

$$T_{e1} = -(poles/2) * \psi_{mr} * \left\{ i_{a1} * \sin(\theta_r) + i_{b1} * \sin(\theta_r - 2*\pi/3) + i_{c1} * \sin(\theta_r + 2*\pi/3) \right\}$$

The power observer 404a2 is provided with current/voltage measurements from the current and voltage measurement block 405a. The output of the power observer 404a2 is computed according to

$$P_{e1} = i_{a1} * u_{a1} + i_{b1} * u_{b1} + i_{c1} * u_{c1}$$

A corresponding torque or power controller 403b for the second system (denoted a2b2c2 in figure 4) generates the q-axis current reference, $i_{q2}{}^*$, based on a torque or power reference provided by the torque or power scheduler 401 and a torque or power feedback provided by a torque observer 404b1 or power observer 404b2. The torque observer 404b1 or power observer 404b2 is built in a similar way as the torque observer 404a1 or power observer 404a2. The inputs of torque observer 404b1 are the phase current measurement from block 405b, the rotor position measurement from block 406, and three phase system shift angle $\delta_{2\_1}$ from block 415. The output of the torque observer 404b1 is computed according to:

$$T_{e2} = -(poles/2) * \psi_{mr} * \left\{ i_{a2} * \sin(\theta_r - \delta_r) + i_{b2} * \sin(\theta_r - \delta_r - 2*\pi/3) + i_{c2} * \sin(\theta_r - \delta_r + 2*\pi/3) \right\}$$

The inputs of power observer 404b2 are the phase current and phase voltage measurement from block 405b. The output of the torque observer 404b2 is computed according to

$$P_{e2} = i_{a2} * u_{a2} + i_{b2} * u_{b2} + i_{c2} * u_{c2}$$

A field weakening scheduler 407 is used to distribute the demagnetization stator flux components among the two sets of three phase systems. The d-axis stator flux references, $\Psi_{d1}$, $\Psi_{d2}$, are generated by a first and second d-axis stator flux computation block, 408a, 408b, for each three phase system according to:

$$\psi_{d1}{}^* = \psi_{mr} - \Delta\psi_{d1}{}^*$$

$$\psi_{d2}{}^* = \psi_{mr} - \Delta\psi_{d2}{}^*$$

In normal operation, the demagnetization flux components are set to zero ($\Delta\Psi_{d1} = \Delta\Psi_{d2} = 0$).

The torque or power scheduler 401 and the field weakening scheduler 407 are responsible for achieving optimal operation of the modular generator 402 and converter systems.

The q-axis current references, $i_{q1}$*, $i_{q2}$*, from two sets of systems are used by a first and second q-axis stator flux computation block, 409a, 409b, to generate a q-axis stator flux reference, $\Psi_{q1}$, $\Psi_{q2}$, for each three phase system. The computation includes the coupling from the other three phase system according to

$$\psi_{q1}^{\;*} = (L_{sl} + \frac{3}{2}L_m) * i_{q1}^{\;*} + \frac{3}{2} * L_m * i_{q2}^{\;*}$$

$$\psi_{q2}^{\;*} = (L_{sl} + \frac{3}{2}L_m) * i_{q2}^{\;*} + \frac{3}{2} * L_m * i_{q1}^{\;*}$$

Blocks 410a and 410b transfer the q-axis stator flux reference, $\Psi_{q1}$, $\Psi_{q2}$, and d-axis stator flux reference $\Psi_{d1}$, $\Psi_{d2}$, for each three phase system into the corresponding first three phase system stator stationary $\alpha1\beta1$ frame and second three phase system stator stationary $\alpha2\beta2$ frame respectively

For the first three phase system the transformed stator flux reference is calculated according to

$$\psi_{\alpha1}^{\;*} = \cos(\theta_r) * \psi_{d1}^{\;*} - \sin(\theta_r) * \psi_{q1}^{\;*}$$

$$\psi_{\beta1}^{\;*} = \sin(\theta_r) * \psi_{d1}^{\;*} + \sin(\theta_r) * \psi_{q1}^{\;*}$$

and for the second three phase system

$$\psi_{\alpha2}^{\;*} = \cos(\theta_r - \delta_r) * \psi_{d2}^{\;*} - \sin(\theta_r - \delta_r) * \psi_{q2}^{\;*}$$

$$\psi_{\beta2}^{\;*} = \sin(\theta_r - \delta_r) * \psi_{d2}^{\;*} + \sin(\theta_r - \delta_r) * \psi_{q2}^{\;*}$$

The transformed stator flux reference signals $\Psi_{\alpha1}$*, $\Psi_{\beta1}$* and $\Psi_{\alpha2}$*, $\Psi_{\beta2}$*, respectively, are then provided to a stator flux oriented controller block 411a, 411b for each system.

The stator flux oriented controller blocks 411a, 411b also receives stator flux feedback signals, $\Psi_{\alpha1}$, $\Psi_{\beta1}$ and $\Psi_{\alpha2}$, $\Psi_{\beta2}$, from a stator flux observer 412. One preferred embodiment of the stator flux observer 412 is voltage mode flux observer, with which the stator flux is measured directly by integration of the phase voltage after removing the phase resistance voltage drop according to equation given below. The other possible embodiment of stator flux observer 412 is a current mode flux observer, which can be build based on the stator flux equation of a modular generator.

$$u_{\alpha1} = (2/3) * \{u_{a1} - (1/2) * u_{b1} - (1/2) * u_{c1}\}$$

$$u_{\beta1} = (2/3) * \{(\sqrt{3}/2) * u_{b1} - (\sqrt{3}/2) * u_{c1}\}$$

$$i_{\alpha 1} = (2/3) * \left\{ i_{a1} - (1/2) * i_{b1} - (1/2) * i_{c1} \right\}$$

$$i_{\beta 1} = (2/3) * \left\{ (\sqrt{3}/2) * i_{b1} - (\sqrt{3}/2) * i_{c1} \right\}$$

$$\psi_{\alpha 1} = \int (u_{\alpha 1} - i_{\alpha 1} * Rs) dt$$

$$\psi_{\beta 1} = \int (u_{\beta 1} - i_{\beta 1} * Rs) dt$$

and

$$u_{\alpha 2} = (2/3) * \left\{ u_{a2} - (1/2) * u_{b2} - (1/2) * u_{c2} \right\}$$

$$u_{\beta 2} = (2/3) * \left\{ (\sqrt{3}/2) * u_{b2} - (\sqrt{3}/2) * u_{c2} \right\}$$

$$i_{\alpha 2} = (2/3) * \left\{ i_{a2} - (1/2) * i_{b2} - (1/2) * i_{c2} \right\}$$

$$i_{\beta 2} = (2/3) * \left\{ (\sqrt{3}/2) * i_{b2} - (\sqrt{3}/2) * i_{c2} \right\}$$

$$\psi_{\alpha 2} = \int (u_{\alpha 2} - i_{a2} * Rs) dt$$

$$\psi_{\beta 2} = \int (u_{\beta 2} - i_{\beta 2} * Rs) dt$$

The outputs of stator flux controller block 411a is a stator voltage reference for the first three phase system a1b1c1 in the stator stationary $\alpha 1\beta 1$ frame which are computed according to the below equation, where $T_{PWM}$ is the PWM switching period.

$$u_{\alpha 1}^{*} = \frac{\psi_{\alpha 1}^{*} - \psi_{\alpha 1}}{T_{PWM}}$$

$$u_{\beta 1}^{*} = \frac{\psi_{\beta 1}^{*} - \psi_{\beta 1}}{T_{PWM}}$$

The outputs of stator flux controller block 411b is a stator voltage reference for the second three phase system a2b2c2 in the stator stationary $\alpha 2\beta 2$ framel, which are computated according to

$$u_{\alpha 2}^{*} = \frac{\psi_{\alpha 2}^{*} - \psi_{a2}}{T_{PWM}}$$

$$u_{\beta 2}^{*} = \frac{\psi_{\beta 2}^{*} - \psi_{\beta 2}}{T_{PWM}}$$

The outputs, $u^*_{\alpha 1}$, $u^*_{\beta 1}$ and $u^*_{\alpha 2}$, $u^*_{\beta 2}$, from stator flux controller blocks 411a, 411b are fed into the PWM modulators 413a, 413b for each three phase system. The PWM modulators 413a and 413b generate the gating signals for the PWM converter 414a and 414b respectively. The PWM converter 414a applies the first three phase system voltage ua1, ub1, uc1 to the generator 402. The PWM converter 414b applies the second three phase system ua2, ub2 and uc2 to the generator 402.

The dynamic load sharing between two sets of three phase systems is hence realized by including the coupling effect in the stator flux reference vector generation.

The principle of the decoupling method above can be applied to support any physical angle shift between three phase systems of the generator. Other implementation methods can also be developed based on the principle illustrated in Figure 4 for the modular generator with any multiple three phase systems..

The invention has mainly been described above with reference to a few embodiments. However, as is readily appreciated by a person skilled in the art, other embodiments than the ones disclosed above are equally possible within the scope of the invention, as defined by the appended patent claims. The illustrations of embodiment are given for the 6-phase PM modular generator, However, the method can be applied for any 3*N phase PM modular generators using the dq frame flux equation, voltage equation and torque equation that have been presented in the disclosure.

## Claims

1. A method for providing load sharing between a first and a second three phase system, said first and second three phase system being connected to a first and second three phase interleaved winding in a generator (302), the method comprising
   determining a q-axis current reference signal for the first three phase system and a q-axis current reference signal for the second three phase system,
   determining a first and second stator flux reference signals based on said q-axis current reference signal for the first three phase system and said q-axis current reference signal for the second three phase system, wherein the first stator flux reference signal for the first three phase system is determined according to

$$\psi_{q1}^{*} = (L_{sl} + \frac{3}{2}L_{m}) * i_{q1}^{*} + \frac{3}{2} * L_{m} * i_{q2}^{*}$$

and the second stator flux reference signal for the second three phase system is determined according to

$$\psi_{q2}{}^* = (L_{sl} + \frac{3}{2}L_m)*i_{q2}{}^* + \frac{3}{2}*L_m*i_{q1}{}^*$$

where $L_{sl}$ denotes the stator phase leakage inductance and $L_m$ denotes the stator phase mutual inductance, determining a first stator flux feedback signal for the first three phase system (a1,b1,c1) and a second stator flux feedback signal for the second three phase system (a2,b2,c2) based on a coupling effect between the first and second three phase systems, and

determining a first stator flux control signal for the first three phase system based on said first stator flux reference signal and said first stator flux feedback signal, and a second stator flux control signal for the second three phase system based on said second stator flux reference signal and said second stator flux feedback signal, thereby minimising the magnetic circuit saturation due to the coupling effects.

2. The method acco
   determining a first and second stator flux d-axis reference signal based on a field weakening requirement on the first three phase system and a field weakening requirement on the second three phase system.

3. The method according to claim 2, comprising
   determining the first stator flux d-axis reference signal according to

$$\psi_{d1}{}^* = \psi_{mr} - \Delta\psi_{d1}{}^*$$

and determining the second stator flux d-axis reference signal according to

$$\psi_{d2}{}^* = \psi_{mr} - \Delta\psi_{d2}{}^*$$

4. The method according to any of the preceding claims, comprising
   determining a phase voltage signal for at least one of the phases in the first or second three phase system,
   integrating the determined phase voltage signal
   determining at least one stator flux feed back signal based on said integrated phase voltage signal.

5. A generator system comprising
   a modular generator (302) comprising a first and second stator three phase interleaved winding, wherein the second interleaved winding ($A_2$,$B_2$,$C_2$) is shifted an electrical angle with respect to the first three phase winding ($A_1$,$B_1$,$C_1$),
   a first and a second three phase system connected to said first and second three phase interleaved winding,
   a torque/power controller adapted to determine a q-axis current reference signal for the first three phase system ($a_1$,$b_1$,$c_1$) and a q-axis current reference signal for the second three phase system ($a_2$,$b_2$,$c_2$),
   a q-axis stator flux controller adapted to determine the first and second stator flux reference signals based on said q-axis current reference signal for the first three phase system and said q-axis current reference signal for the second three phase system, wherein the q-axis stator flux controller is adapted to determine the first stator flux reference signal for the first three phase system according to

$$\psi_{q1}{}^* = (L_{sl} + \frac{3}{2}L_m)*i_{q1}{}^* + \frac{3}{2}*L_m*i_{q2}{}^*$$

and determine the second stator flux reference signal for the second three phase system according to

$$\psi_{q2}{}^* = (L_{sl} + \frac{3}{2}L_m)*i_{q2}{}^* + \frac{3}{2}*L_m*i_{q1}{}^*$$

where $L_{sl}$ denotes the stator phase leakage inductance and $L_m$ denotes the stator phase mutual inductance, a stator flux observer adapted to determine a first stator flux feedback signal for the first three phase system and a second stator flux feedback signal for the second three phase system based on a coupling effect between the first and second three phase systems, and

a stator flux controller adapted to determine a first stator flux control signal for the first three phase system based on said first stator flux reference signal and said first stator flux feedback signal, and a second stator flux control signal for the second three phase system based on said second stator flux reference signal and said second stator flux feedback signal, thereby minimising the magnetic circuit saturation due to the coupling effects and realising a dynamic load sharing decoupling control.

6. The generator system according to any of claims 5, comprising
a d-axis stator flux controller adapted to determine a first and second stator flux d-axis reference signal based on a field weakening requirement on the first three phase system and a field weakening requirement on the second three phase system.

7. The generator system according to claim 6, wherein the d-axis stator flux controller is adapted to determine the first stator flux d-axis reference signal according to

$$\psi_{d1}{}^{*} = \psi_{mr} - \Delta\psi_{d1}{}^{*}$$

and determine the second stator flux d-axis reference signal according to

$$\psi_{d2}{}^{*} = \psi_{mr} - \Delta\psi_{d2}{}^{*}$$

8. The generator system according to any of claims 5-7,
wherein the stator flux observer is adapted to
determine a phase voltage signal for at least one of the phases in the first or second three phase system,
integrate the determined phase voltage signal, and
determine at least one stator flux feed back signal based on said integrated phase voltage signal.

9. The generator system according to claim 5, comprising a six phase modular generator comprising
a first three phase winding,
a second three phase winding interleaved with the first three phase winding and phase shifted at an electrical angle between 70° and 110° from the first three phase winding.

10. The generator system according to claim 5, comprising a nine phase modular generator comprising
a first three phase winding,
a second three phase winding interleaved with the first three phase winding and phase shifted at an electrical angle between 10° and 50° from the first three phase winding,
a third three phase winding interleaved with the first and second three phase windings and phase shifted at an electrical angle between 40° and 80° or between 70° and 110° from the first three phase winding.

**Patentansprüche**

1. Verfahren zum Vorsehen von Lastverteilung zwischen einem ersten und einem zweiten Dreiphasensystem, wobei das erste und das zweite Dreiphasensystem an eine erste und eine zweite verschachtelte Dreiphasenwicklung in einem Generator (302) angeschlossen sind, wobei das Verfahren umfasst:

Bestimmen eines q-Achsen-Stromreferenzsignals für das erste Dreiphasensystem und eines q-Achsen-Stromreferenzsignals für das zweite Dreiphasensystem,
Bestimmen eines ersten und eines zweiten Statorflussreferenzsignals auf der Basis des q-Achsen-Stromreferenzsignals für das erste Dreiphasensystem und des q-Achsen-Stromreferenzsignals für das zweite Dreiphasensystem, wobei das erste Statorflussreferenzsignal für das erste Dreiphasensystem gemäß

$$\psi_{q1}{}^* = (L_{sl} + \frac{3}{2} L_m) * i_{q1}{}^* + \frac{3}{2} * L_m * i_{q2}{}^*$$

bestimmt wird und das zweite Statorflussreferenzsignal für das zweite Dreiphasensystem gemäß

$$\psi_{q2}{}^* = (L_{sl} + \frac{3}{2} L_m) * i_{q2}{}^* + \frac{3}{2} * L_m * i_{q1}{}^*$$

bestimmt wird,
wobei $L_{sl}$ die Statorphasenstreuinduktivität und $L_m$ die Statorphasengegeninduktivität bezeichnet,
Bestimmen eines ersten Statorflussrückkopplungssignals für das erste Dreiphasensystem ($a_1$, $b_1$, $c_1$) und eines zweiten Statorflussrückkopplungssignals für das zweite Dreiphasensystem ($a_2$, $b_2$, $c_2$) auf der Basis eines Kopplungseffekts zwischen dem ersten und dem zweiten Dreiphasensystem, und
Bestimmen eines ersten Statorflussregelsignals für das erste Dreiphasensystem auf der Basis des ersten Statorflussreferenzsignals und des ersten Statorflussrückkopplungssignals sowie eines zweiten Statorflussregelsignals für das zweite Dreiphasensystem auf der Basis des zweiten Statorflussreferenzsignals und des zweiten Statorflussrückkopplungssignals, wodurch die Magnetkreissättigung infolge der Kopplungseffekte minimiert wird.

2. Verfahren nach Anspruch 1, umfassend
Bestimmen eines ersten und eines zweiten Statorfluss-d-Achsen-Referenzsignals auf der Basis eines Feldschwächungserfordernisses auf dem ersten Dreiphasensystem und eines Feldschwächungserfordernisses auf dem zweiten Dreiphasensystem.

3. Verfahren nach Anspruch 2, umfassend:

Bestimmen des ersten Statorfluss-d-Achsen-Referenzsignals gemäß

$$\psi_{d1}{}^* = \psi_{mr} - \Delta\psi_{d1}{}^*$$

und Bestimmen des zweiten Statorfluss-d-Achsen-Referenzsignals gemäß

$$\psi_{d2}{}^* = \psi_{mr} - \Delta\psi_{d2}{}^*$$

4. Verfahren nach einem beliebigen der vorhergehenden Ansprüche, umfassend
Bestimmen eines Phasenspannungssignals für mindestens eine der Phasen in dem ersten oder dem zweiten Dreiphasensystem,
Integrieren des bestimmten Phasenspannungssignals,
Bestimmen von mindestens einem Statorflussrückkopplungssignal auf der Basis des integrierten Phasenspannungssignals.

5. Generatorsystem, umfassend:

einen modularen Generator (302), umfassend eine erste und eine zweite verschachtelte Stator-Dreiphasenwicklung, wobei die zweite verschachtelte Wicklung ($A_2$, $B_2$, $C_2$) um einen elektrischen Winkel in Bezug auf die erste Dreiphasenwicklung ($A_1$, $B_2$, $C_2$) verschoben ist,
ein erstes und ein zweites Dreiphasensystem, das mit der ersten und der zweiten verschachtelten Dreiphasenwicklung verbunden ist,

einen Drehmoment/Leistungs-Regler, der ausgebildet ist, um ein q-Achsen-Stromreferenzsignal für das erste Dreiphasensystem ($a_1$, $b_1$, $c_2$) und ein q-Achsen-Stromreferenzsignal für das zweite Dreiphasensystem ($a_2$, $b_2$, $c_2$) zu bestimmen,

einen q-Achsen-Statorflussregler, der ausgebildet ist, um das erste und das zweite Statorflussreferenzsignal auf der Basis des q-Achsen-Stromreferenzsignals für das erste Dreiphasensystem und des q-Achsen-Stromreferenzsignals für das zweite Dreiphasensystem zu bestimmen, wobei der q-Achsen-Statorflussregler ausgebildet ist, um das erste Statorflussreferenzsignal für das erste Dreiphasensystem gemäß

$$\psi_{q1}^{\;*} = (L_{sl} + \frac{3}{2} L_m) * i_{q1}^{\;*} + \frac{3}{2} * L_m * i_{q2}^{\;*}$$

zu bestimmen und um das zweite Statorflussreferenzsignal für das zweite Dreiphasensystem gemäß

$$\psi_{q2}^{\;*} = (L_{sl} + \frac{3}{2} L_m) * i_{q2}^{\;*} + \frac{3}{2} * L_m * i_{q1}^{\;*}$$

zu bestimmen,

wobei $L_{sl}$ die Statorphasenstreuinduktivität und $L_m$ die Statorphasengegeninduktivität bezeichnet,

einen Statorflussbeobachter, der ausgebildet ist, um ein erstes Statorflussrückkopplungssignal für das erste Dreiphasensystem und ein zweites Statorflussrückkopplungssignal für das zweite Dreiphasensystem auf der Basis eines Kopplungseffekts zwischen dem ersten und dem zweiten Dreiphasensystem zu bestimmen, und einen Statorflussregler, der ausgebildet ist, um ein erstes Statorflussregelsignal für das erste Dreiphasensystem auf der Basis des ersten Statorflussreferenzsignals und des ersten Statorflussrückkopplungssignals und ein zweites Statorflussregelsignal für das zweite Dreiphasensystem auf der Basis des zweiten Statorflussreferenzsignals und des zweiten Statorflussrückkopplungssignals zu bestimmen und **dadurch** die Magnetkreissättigung infolge der Kopplungseffekte zu minimieren und eine dynamische Lastverteilungs-Entkopplungsregelung zu realisieren.

6. Generatorsystem nach Anspruch 5, umfassend einen d-Achsen-Statorflussregler, der ausgebildet ist, um ein erstes und ein zweites Statorfluss-d-Achsen-Referenzsignal auf der Basis eines Feldschwächungserfordernisses auf dem ersten Dreiphasensystem und eines Feldschwächungserfordernisses auf dem zweiten Dreiphasensystem zu bestimmen.

7. Generatorsystem nach Anspruch 6, wobei der d-Achsen-Statorflussregler ausgebildet ist, um das erste Statorfluss-d-Achsen-Referenzsignal gemäß

$$\psi_{d1}^{\;*} = \psi_{mr} - \Delta\psi_{d1}^{\;*}$$

zu bestimmen und um das zweiten Statorfluss-d-Achsen-Referenzsignal gemäß

$$\psi_{d2}^{\;*} = \psi_{mr} - \Delta\psi_{d2}^{\;*}$$

zu bestimmen.

8. Generatorsystem nach einem beliebigen der Ansprüche 5-7, wobei der Statorflussbeobachter ausgebildet ist, um ein Phasenspannungssignal für mindestens eine der Phasen in dem ersten oder dem zweiten Dreiphasensystem zu bestimmen,

das bestimmte Phasenspannungssignal zu integrieren, und

mindestens ein Statorflussrückkopplungssignal auf der Basis des integrierten Phasenspannungssignals zu bestimmen.

**9.** Generatorsystem nach Anspruch 5 mit einem modularen Sechsphasengenerator, umfassend
eine erste Dreiphasenwicklung,
eine zweite Dreiphasenwicklung, die mit der ersten Dreiphasenwicklung verschachtelt ist und um einen elektrischen Winkel zwischen 70˚ und 110˚ von der ersten Dreiphasenwicklung phasenverschoben ist.

**10.** Generatorsystem nach Anspruch 5 mit einem modularen Neunphasengenerator, umfassend:

eine erste Dreiphasenwicklung,
eine zweite Dreiphasenwicklung, die mit der ersten Dreiphasenwicklung verschachtelt und um einen elektrischen Winkel zwischen 10˚ und 50˚ von der ersten Dreiphasenwicklung phasenverschoben ist,
eine dritte Dreiphasenwicklung, die mit der ersten und der zweiten Dreiphasenwicklung verschachtelt und um einen elektrischen Winkel zwischen 40˚ und 80˚ oder zwischen 70˚ und 110˚ von der ersten Dreiphasenwicklung phasenverschoben ist.

**Revendications**

**1.** Procédé pour partager un chargement dynamique entre un premier et un second système triphasé, lesdits premier et second systèmes triphasés étant reliés à des premier et second bobinages imbriqués triphasés dans un générateur (302), le procédé comprenant
la détermination d'un signal de référence de courant de l'axe q pour le premier système triphasé et un signal de référence de courant de l'axe q pour le second système triphasé,
la détermination de premier et second signaux de référence de flux de stator en se basant sur ledit signal de référence de courant de l'axe q pour le premier système triphasé et ledit signal de référence de courant de l'axe q pour le second système triphasé, dans lequel le premier signal de référence de flux de stator pour le premier système triphasé est déterminé selon

$$\psi_{q1}^{\ *} = (L_{sl} + \frac{3}{2} L_m) * i_{q1}^{\ *} + \frac{3}{2} * L_m * i_{q2}^{\ *}$$

et le second signal de référence de flux de stator pour le second système triphasé est déterminé selon

$$\psi_{q2}^{\ *} = (L_{sl} + \frac{3}{2} L_m) * i_{q2}^{\ *} + \frac{3}{2} * L_m * i_{q1}^{\ *}$$

où $L_{sl}$ est l'inductance de fuite de la phase de stator et $L_m$ est l'inductance mutuelle de la phase de stator, déterminant un premier signal de retour de flux de stator pour le premier système triphasé ($a_1$, $b_1$, $c_1$) et un second signal de retour de flux de stator pour le second système triphasé ($a_2$, $b_2$, $c_2$) en se basant sur un effet de couplage entre le premier et le second système triphasé, et
la détermination d'un premier signal de commande de flux de stator pour le premier système triphasé en se basant sur ledit premier signal de référence de flux de stator et ledit premier signal de retour de flux de stator, et d'un second signal de commande de flux de stator pour le second système triphasé en se basant sur ledit second signal de référence de flux de stator et ledit second signal de retour de flux de stator, minimisant ainsi la saturation du circuit magnétique due aux effets de couplage.

**2.** Procédé selon la revendication 1, comprenant
la détermination de premier et second signaux de référence de l'axe d de flux de stator en se basant sur une exigence d'affaiblissement de champ sur le premier système triphasé et une exigence d'affaiblissement de champ sur le second système triphasé.

**3.** Procédé selon la revendication 2, comprenant
la détermination du premier signal de référence de l'axe d de flux de stator selon

$$\psi_{d1}{}^* = \psi_{mr} - \Delta\psi_{d1}{}^*$$

et la détermination du second signal de référence de l'axe d de flux de stator selon

$$\psi_{d2}{}^* = \psi_{mr} - \Delta\psi_{d2}{}^*$$

**4.** Procédé selon l'une quelconque des revendications précédentes, comprenant
la détermination d'un signal de tension de phase pour au moins une des phases dans le premier ou le second système triphasé,
l'intégration du signal de tension de phase déterminé,
la détermination d'au moins un signal de retour de flux de stator en se basant sur ledit signal de tension de phase déterminé.

**5.** Système de générateur comprenant
un générateur modulaire (302) comprenant des premier et second bobinages imbriqués triphasés, dans lequel le second bobinage imbriqué triphasé (A$_2$, B$_2$, C$_2$) est décalé à un angle électrique par rapport au premier bobinage de phase triphasé (A$_1$, B$_1$, C$_1$),
des premier et second systèmes triphasés reliés audits premier et second bobinages imbriqués triphasés,
une commande de couple/puissance adaptée pour déterminer un signal de référence de courant de l'axe q pour le premier système triphasé (a$_1$, b$_1$, c$_1$) et un signal de référence de courant de l'axe q pour le second système triphasé (a$_2$, b$_2$, c$_2$),
une commande de flux de stator de l'axe q adaptée pour déterminer les premier et second signaux de référence de flux de stator en se basant sur ledit signal de référence de courant de l'axe q pour le premier système triphasé et ledit signal de référence de courant de l'axe q pour le second système triphasé, dans lequel la commande de flux de stator de l'axe q est adaptée pour déterminer le premier signal de référence de flux de stator pour le premier système triphasé selon

$$\psi_{q1}{}^* = (L_{sl} + \frac{3}{2}L_m) * i_{q1}{}^* + \frac{3}{2} * L_m * i_{q2}{}^*$$

et détermine le second signal de référence de flux de stator pour le second système triphasé selon

$$\psi_{q2}{}^* = (L_{sl} + \frac{3}{2}L_m) * i_{q2}{}^* + \frac{3}{2} * L_m * i_{q1}{}^*$$

où L$_{sl}$ est l'inductance de fuite de la phase de stator et L$_m$ est l'inductance mutuelle de la phase de stator,
un observateur de flux de stator adapté pour déterminer un premier signal de retour de flux de stator pour le premier système triphasé et un second signal de retour de flux de stator pour le second système triphasé en se basant sur un effet de couplage entre les premier et second systèmes triphasés, et
une commande de flux de stator pour déterminer un premier signal de commande de flux de stator pour le premier système triphasé en se basant sur ledit premier signal de référence de flux de stator et ledit premier signal de retour de flux de stator, et un second signal de commande de flux de stator pour le second système triphasé en se basant sur ledit second signal de référence de flux de stator et ledit second signal de retour de flux de stator, minimisant ainsi la saturation du circuit magnétique due aux effets de couplage et effectuant ainsi une commande découplant le partage de charge dynamique.

6. Système de générateur selon la revendication 5, comprenant une commande de flux de stator de l'axe d adaptée pour déterminer des premier et second signaux de référence de l'axe d de flux de stator en se basant sur une exigence d'affaiblissement de champ sur le premier système triphasé et une exigence d'affaiblissement de champ sur le second système triphasé.

7. Système de générateur selon la revendication 6, dans lequel la commande de flux de stator de l'axe d est adaptée pour déterminer le premier signal de référence de l'axe d de flux de stator selon

$$\psi_{d1}^{*} = \psi_{mr} - \Delta\psi_{d1}^{*}$$

et déterminer le second signal de référence de l'axe d de flux de stator selon

$$\psi_{d2}^{*} = \psi_{mr} - \Delta\psi_{d2}^{*}$$

8. Système de générateur selon la revendication 7, dans lequel l'observateur de flux de stator est adapté pour déterminer un signal de tension de phase pour au moins une des phases dans le premier ou le second système triphasé, intégrer le signal de tension de phase déterminé, et déterminer au moins un signal de retour de flux de stator en se basant sur ledit signal de tension de phase intégré.

9. Système de générateur selon la revendication 5, comprenant un générateur modulaire à six phases comprenant un premier bobinage triphasé un second bobinage triphasé imbriqué avec le premier bobinage triphasé et décalé en phase à un angle électrique situé entre 70˚ et 110˚ depuis le premier bobinage triphasé.

10. Système de générateur selon la revendication 5, comprenant un générateur modulaire à neuf phases comprenant un premier bobinage triphasé un second bobinage triphasé imbriqué avec le premier bobinage triphasé et décalé en phase à un angle électrique situé entre 10˚ et 50˚ depuis le premier bobinage triphasé, un troisième bobinage triphasé imbriqué avec les premier et second bobinages triphasés et décalé en phase à un angle électrique situé entre 40˚ et 80˚ ou entre 70˚ et 110˚ depuis le premier bobinage triphasé

Figure 1a

$$\theta_r = \theta_{r0} + \int_{t_0}^{t} \omega(\tau)d\tau$$

Figure 1b

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6008616 A

- US 2003085627 A